# EUROPEAN PATENT APPLICATION

(11) **EP 3 882 007 A1**
(43) Date of publication of application: **22.09.2021**
(21) Application number: 21162543.9
(22) Date of filing: 15.03.2021
(51) Int. Cl.: B29C 65/02, B29C 65/74, B65B 51/30, B29C 65/08, B29C 65/36, B29K 23/00, B29K 101/12, B29K 705/02, B29L 9/00

(54) **PACKAGING UNIT AND METHOD FOR PRODUCING SEALED PACKAGES CONTAINING A POURABLE FOOD PRODUCT**

(30) Priority: 19.03.2020 EP 20164092
(71) Applicant: Tetra Laval Holdings & Finance S.A., 1009 Pully (CH)
(72) Inventor: SERPETTI, Klaus, 42048 Rubiera (IT)
(74) Representative: Tetra Pak - Patent Attorneys SE

(57) **Abstract**

Packaging unit (1) for producing sealed packages (2) from a tube (3) fed along a first direction (Y) and comprising one pair of jaws (4), which grip the tube (3) along transverse sections (5), defining respective second directions (Z) crosswise to the first direction (Y) ; sealing means (9), which seal transverse sections (5) to form sealed packages (2); separating means (6) for separating packages (2) from the tube (3) along transverse sections (5) and comprising one knife (7) movably supported by one jaw (4b); driving means (8) moving the knife (7) with respect to the jaw (4b) along a plane (P) crosswise to the first direction (Y) and between a resting position (R), in which a cutting edge (21) of the knife (7) is spaced from the tube (3) and is aligned with the respective second direction (Z) defined by the transverse section (5) to be cut, and an operating position (O), in which the knife (7) has completely cut the tube (3) at the transverse section (5); driving means (8) move the cutting edge (21) obliquely with respect to the second direction (Z) when said driving means (8) move the knife (7) from the resting position (R) to the operating position (O); cutting edge (21) contacts the transverse section (5) along a cutting surface (39) parallel to the second direction (Z) and increasing as the knife (7) moves from the resting position (R) to the operating position (O).

## Description

### TECHNICAL FIELD

The present invention relates to a packaging unit for producing sealed packages containing a pourable food product from a tube of packaging material.

The present invention also relates to a method for producing sealed packages containing a pourable food product from a tube of packaging material.

### BACKGROUND ART

As commonly known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by folding, sealing and cutting a web of laminated packaging material. In particular, the packaging material has a multilayer structure comprising a base layer, e.g. of carton and/or paper, covered on both sides with layers of heat-seal plastic material, e.g. polyethylene. In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging units, on which a continuous tube is formed from the web-fed packaging material; the web of packaging material is sterilized in the packaging unit, e.g. by applying a chemical sterilizing agent, such as a hydrogen peroxide solution, which, once sterilization is completed, is removed from the surfaces of the packaging material, e.g. evaporated by heating. The web so sterilized is then maintained in a closed, sterile environment, and is folded and sealed longitudinally to form a tube, which is fed in a vertical travelling direction.

The tube of packaging material, which in effect forms an extension of the aseptic chamber, is filled with the sterilized or sterile-processed food product, and is sealed and subsequently cut along equally spaced transverse sections. Pillow packs are so obtained which are connected to one another by transverse sealing strips, i.e. extending perpendicularly to the travelling direction of the tube. The pillow packs are then separated from one another at the relative transverse sealing strips and are conveyed to a folding station where they are folded mechanically to form respective finished parallelepiped-shaped packages.

Packaging units are known, which comprise two pairs of jaws moving on respective guides and acting alternately on the tube of packaging material to grip and seal the tube along equally spaced transverse sections.

The tube portion gripped between each pair of jaws is normally sealed by heating means carried on one of the jaws and which locally melt the layers of heat-seal plastic material gripped between the jaws.

In particular, the sealing operation is performed, at each transverse section, along two transverse sealing strips spaced slightly apart from one another.

Ultrasound or induction-heating sealing devices are also widely used to locally melt the packaging material.

Once the sealing operation is completed, a knife, carried, for example, by one of the jaws in each pair, is activated and interacts with the tube of packaging material to cut the tube along a line of the transverse section extending centrally between the relative pair of transverse sealing strips, so as to detach a pillow pack from the bottom end of the tube of packaging material.

In detail, the packaging unit comprises knife-driving means, which are configured to move each knife along a separating direction, which is crosswise to the travelling direction of the tube.

In detail, the knife-driving means move the knife between a resting position, in which the knife is spaced from the tube, and an operating position, in which the knife cuts the tube at one of the above-mentioned transverse sections.

In further detail, the entire cutting edge of the knife interacts at the same time with the tube along the entire length of the respective transverse section, which extends crosswise to the travelling direction and separating direction.

The same type of knives is also used on packaging units comprising two chain or linear motor conveyors, which define respective endless paths and include links or independently moved carts fitted with respective sealing jaws.

The two paths have respective rectilinear branches substantially facing and parallel to each other, and between which the tube of packaging material is fed so that the jaws on one conveyor cooperate with the corresponding jaws on the other conveyor along said branches, to grip the tube at a number of successive equally spaced transverse sections, and to seal and separate the packs.

Although being functionally valid, the packaging units of the above-mentioned types are still open for further improvements.

In particular, since the tube portion gripped between each pair of jaws is melt, each knife interacts with a locally soft and scarcely rigid packaging material and the separating operation may be difficult.

Moreover, due to the mechanical properties of the heated packaging material, the separation is obtained by exerting high separating forces on the sealed transverse sections.

As a consequence, the knives are subject to a certain wear.

In addition, the knives of the known packaging units might tend to get stuck in the operating position, because of the tendency to stick of the heated packaging material.

As a consequence, the return movement of the knives towards the relative resting position may be in some cases hindered.

In view of this, a need is felt within the sector for a packaging unit comprising an optimized knife, which can be used for efficiently separating the packages from the tube of packaging material and having a longer service life.

### DISCLOSURE OF INVENTION

It is an object of the present invention to provide a packaging unit, which allows to meet the above-mentioned need in a simple and economic manner.

This object is achieved by a packaging unit as claimed in claim 1.

This object is also achieved by a method for producing sealed packages containing a pourable food product from a tube of packaging material as claimed in claim 9.

### BRIEF DESCRIPTION OF THE DRAWINGS

One preferred, non-limiting embodiment of the present invention will be described by way of example with reference to the accompanying drawings, in which:
- Figure 1 is a front view of a packaging unit for producing sealed packages containing pourable food products from a tube of packaging material according to the present invention and with parts removed for clarity;
- Figures 2 to 5 are cross-sections along line II-II of Figure 1 showing a pair of jaws and the relative knife of the packaging unit of Figure 1, in respective sequential steps of a cutting movement;
- Figure 6 is a larger-scale cross-section along line VI-VI of Figure 2;
- Figure 6a is a larger-scale cross-section along line VIa-VIa of Figure 6;
- Figure 7 is a larger-scale cross-section along line VII-VII of Figure 2;
- Figure 7a is a larger-scale cross-section along line VIIa-VIIa of Figure 7;
- Figures 8 and 9 are larger-scale partial lateral views of the packaging unit of Figure 1 with the pair of jaws and the relative knife partially sectioned, in two operative steps corresponding to Figures 2 and 5, respectively;
- Figures 10 to 13 are schematic larger-scale front views of a portion of the tube in sequential operative steps of a cutting movement corresponding to Figures 2 to 5, respectively.

### BEST MODES FOR CARRYING OUT THE INVENTION

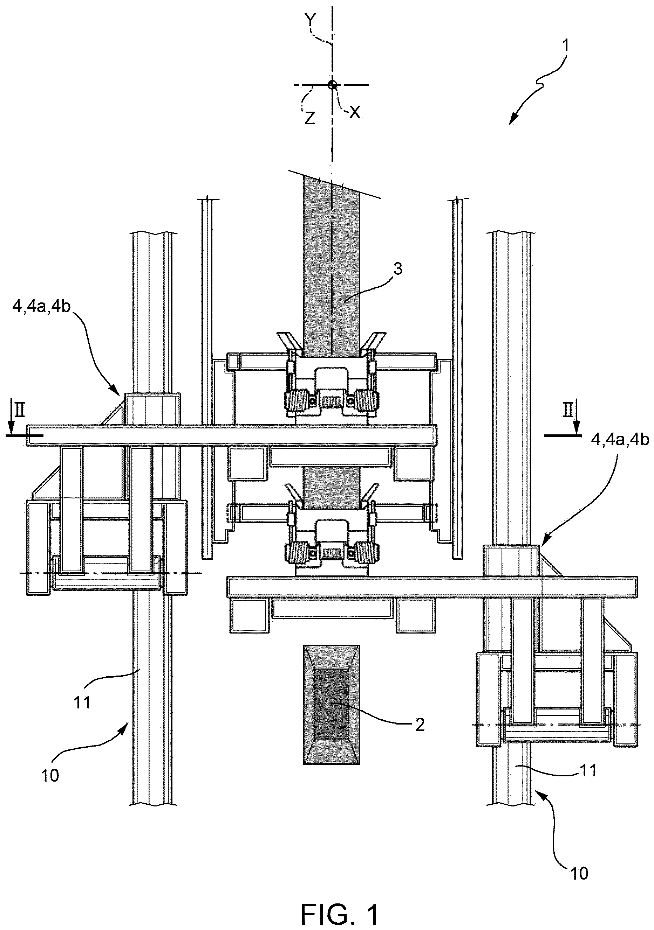

Number 1 in Figure 1 indicates as a whole an example of a packaging unit according to the present invention for producing sealed packages 2 containing a pourable food product from a tube 3 of packaging material fed along a direction Y and continuously filled with the pourable food product. In one embodiment, direction Y is vertical.

Packaging unit 1 comprises:
- a structure 10 with two guides 11, extending parallel to direction Y;
- two pairs of jaws 4 slidably fitted on respective guides 11 and configured to grip tube 3 along spaced transverse sections 5, defining respective directions Z crosswise, in particular orthogonal, to direction Y;
- sealing means 9 configured to seal transverse sections 5, in order to form sealed packages 2; and
- separating means 6 for separating packages 2 from tube 3 along transverse sections 5.

More specifically, separating means 6 comprise, for each pair of jaws 4, one knife 7, which is movably supported along a direction X crosswise, in particular orthogonal, to directions Y and Z.

Packaging unit 1 further comprises driving means 8, which are configured to move each knife 7 with respect to the relative pair of jaws 4 along a plane P crosswise, in particular orthogonal, to direction Y and between an operating position O and a resting position R.

In the resting position R, a cutting edge 21 of knife 7 is spaced from tube 3 along direction X and is aligned with the direction Z defined by the transverse section 5 to be cut, whilst in the operating position O, knife 7 has completely cut tube 3 at the respective transverse sections 5.

In the following of the present description, reference will be made to a single pair of jaws 4 and to the relative knife 7 for the sake of simplicity, being the two pairs of jaws 4 identical to one another.

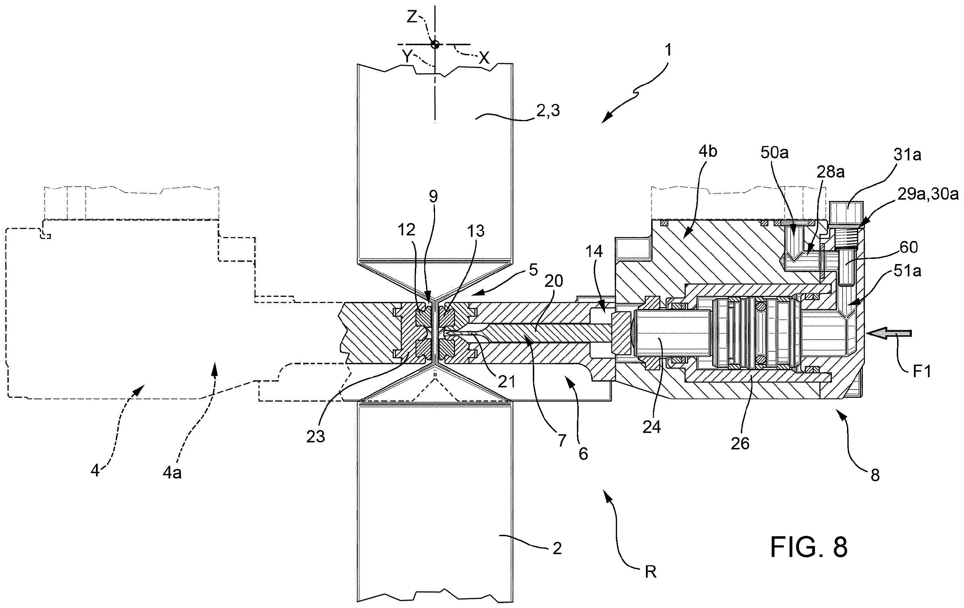

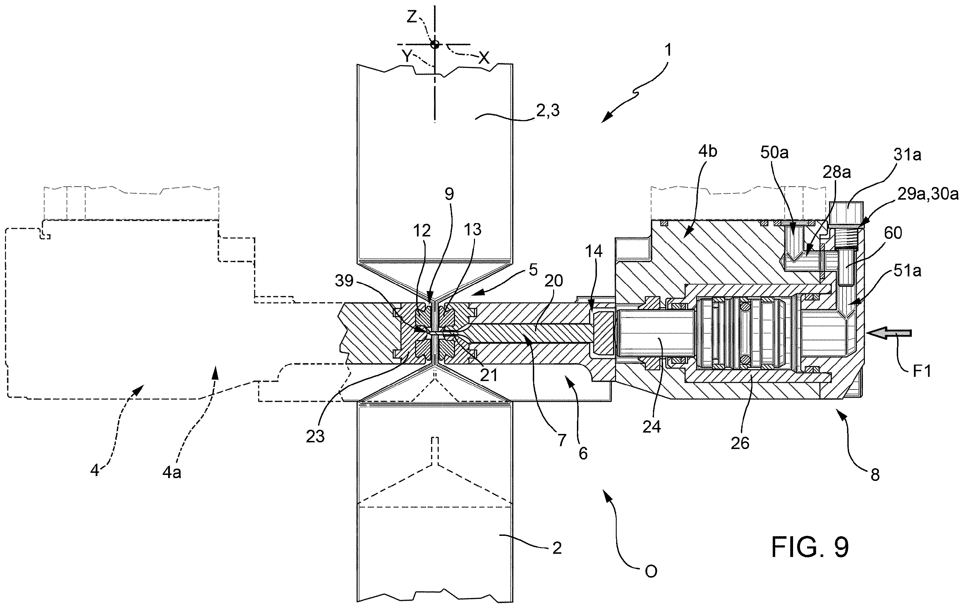

In detail, the single pair of jaws 4 comprises a sealing jaw 4a and the corresponding counter-jaw 4b, which are located on opposite sides of tube 3 along direction X (Figures 8 and 9) and are movable, crosswise to direction Y, between an open position and a closed position, in which they grip and seal tube 3.

Furthermore, sealing means 9 comprise a sealing device 12 and a pressure pad 13, which are located on sealing jaw 4a and counter-jaw 4b, respectively (Figures 8 and 9).

In detail, sealing device 12 locally heats the layers of packaging material gripped between jaws 4a, 4b, while cooperating with pressure pad 13.

Sealing device 12 may be an ultrasound or a heating sealing device, for instance of electric induction-type.

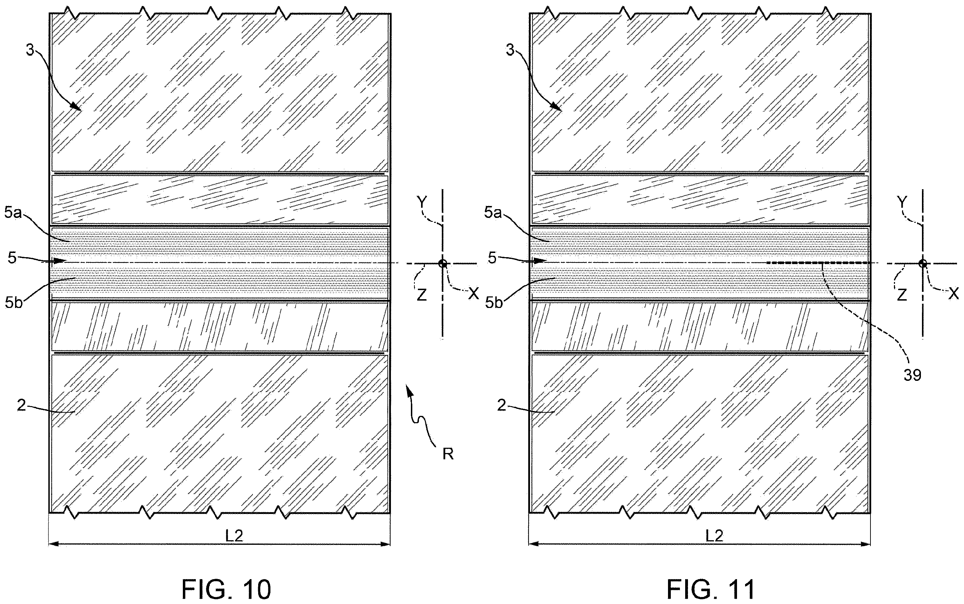

In detail, as shown in Figures 10 to 13, sealing means 9 seal each transverse section 5 at two respective transverse sealing strips 5a, 5b spaced slightly apart from one another along direction Y and extending parallel to the respective direction Z.

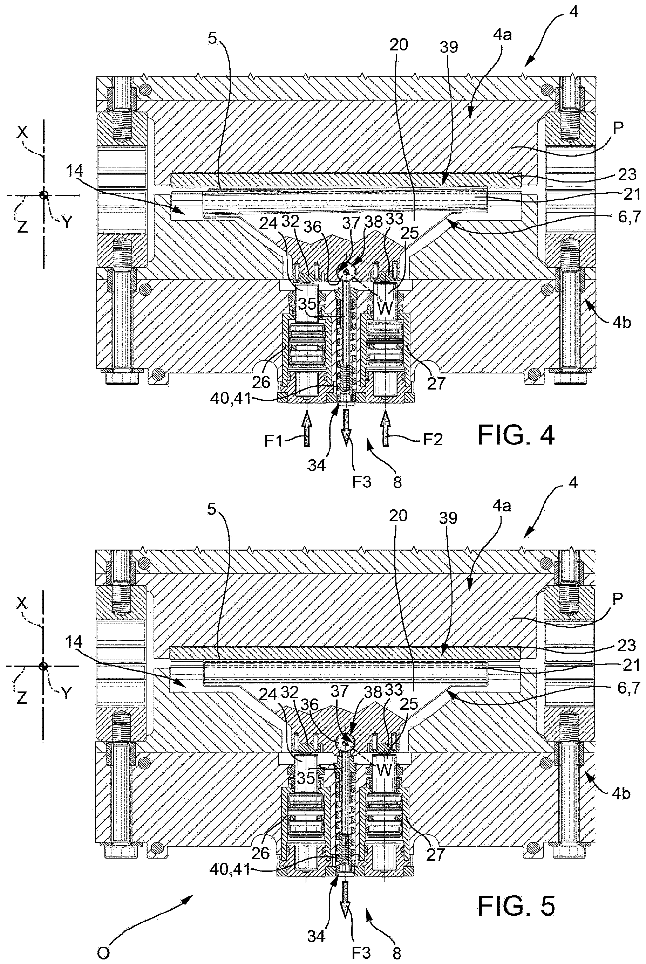

Furthermore, counter-jaw 4b carries knife 7 and sealing jaw 4a comprises a block 23 against which knife 7 abuts in operating position O (Figures 5 and 9).

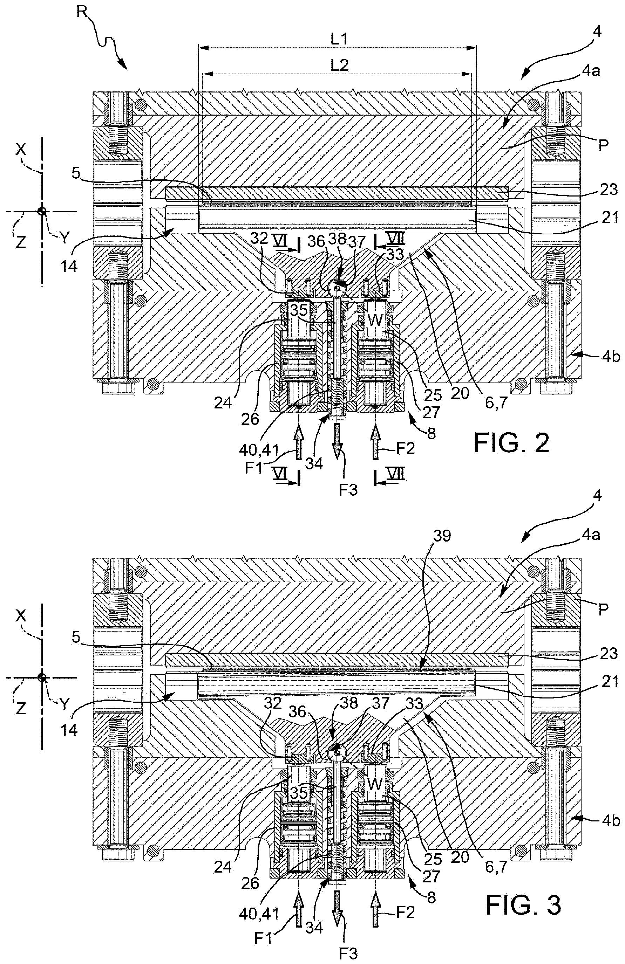

In detail, counter-jaw 4b is formed with a recess 14, for housing knife 7 in a sliding manner along direction X (Figures 2 to 5, 8 and 9).

As shown in Figures 2 to 5, 8 and 9, knife 7 comprises a main body 20 and a cutting edge 21, which is arranged on the side of main body 20 facing sealing jaw 4a.

Cutting edge 21 has a rectangular shape in plane P and has preferably a slightly bigger extension L1 than the extension L2 of transverse sections 5 along direction Z (Figures 2 to 5).

When knife 7 is in resting position R, cutting edge 21 is completely housed inside recess 14 (Figures 2 and 8).

When knife 7 is in operating position O, cutting edge 21 is parallel to respective direction Z, protrudes from recess 14 along direction X and abuts against block 23 of sealing jaw 4a (Figures 5 and 9).

In addition, a cutting movement of knife 7 is a movement in which knife 7 is moved from resting position R to operating position O, while a return movement of knife 7 is a movement in which knife 7 is moved from operating position O to resting position R.

Furthermore, driving means 8 comprise two hydraulic pistons 24, 25, sliding in respective cylinders 26, 27 parallel to direction X.

In the embodiment shown, hydraulic pistons 24, 25 and respective cylinders 26, 27 are equal to one another.

As shown in Figures 2 to 5, pistons 24, 25 are spaced apart from each other parallel to direction Z and are arranged on the side of knife 7 opposite to cutting edge 21 along direction X.

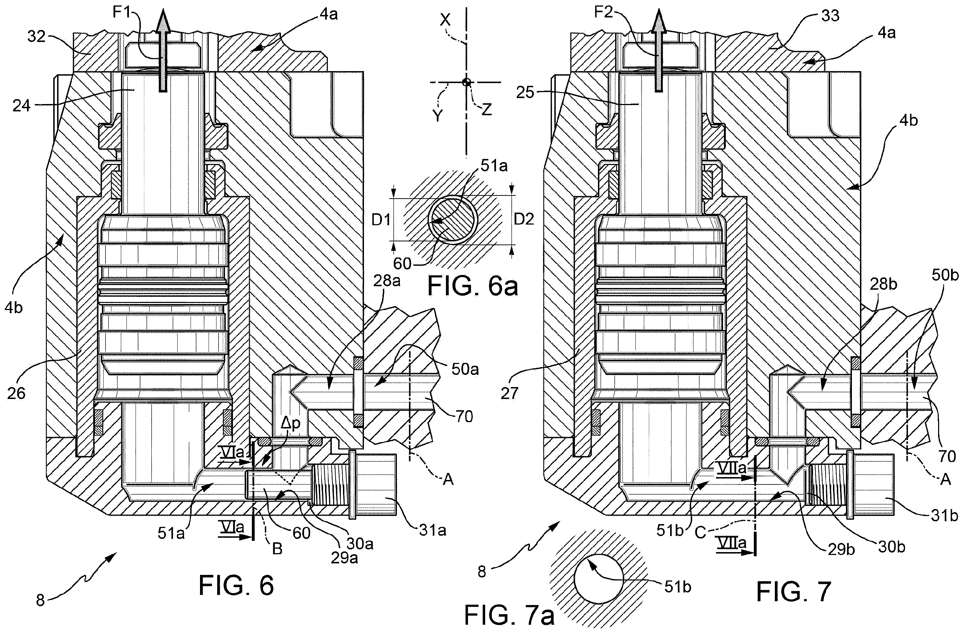

Furthermore, counter-jaw 4b comprises conduits 28a, 28b for feeding respective cylinders 26, 27 with a pressurised fluid 70, preferably oil (Figures 6, 6a, 7 and 7a).

In detail, conduits 28a, 28b are supplied by a not-shown common pipe, which puts in fluidic communication both cylinders 26, 27 with a known and not-shown hydraulic supply system.

Conduits 28a, 28b comprise, for each cylinder 26, 27:
- respective inlet conduits 50a, 50b, only partially sketched in Figures 6 and 7, which put in fluidic communication the relative cylinder 26, 27 with the common pipe;
- respective purge conduits 29a, 29b with relative purge outlets 30a, 30b, which are closed by respective threaded caps 31a, 31b (Figures 6 and 7); and
- respective cylinder supply conduits 51a, 51b, which fluidically connect each inlet conduit 50a, 50b and each purge conduit 29a, 29b with the relative cylinder 26, 27.

In the embodiment shown, conduits 28a, 28b of respective cylinders 26, 27 are equal to one another.

During the cutting movement of knife 7, pistons 24, 25 push knife 7 with respective forces F1, F2, which are parallel to direction X and depend on the pressure of fluid 70 at respective cylinder supply conduits 51a, 51b.

Furthermore, since cylinders 26 and 27 are fed by the not-shown common inlet pipe, during the cutting movement of knife 7 a pressure pA of fluid 70 measured at a section A of inlet conduits 50a, 50b arranged upstream of the respective purge conduits 29a, 29b is equal for both cylinders 26 and 27 (Figures 6 and 7).

Advantageously, driving means 8 are configured to move cutting edge 21 obliquely with respect to the direction Z of the transverse section 5 to be cut when they move knife 7 from resting position R towards operating position O (Figures 2 to 5).

Furthermore, cutting edge 21 contacts the respective transverse section 5 along a cutting surface 39 parallel to the respective direction Z and progressively increasing as knife 7 moves from resting position R towards operating position O (Figures 3 to 5, 11 to 13).

In particular, the movement imparted by driving means 8 to knife 7 from resting position R towards operating position O includes a translational component along a direction X and a rotational component about an axis W parallel to direction Y (Figures 2 to 5).

In the embodiment shown, cutting surface 39 extends centrally between the relative pair of transverse sealing strips 5a, 5b (Figures 11 to 13).

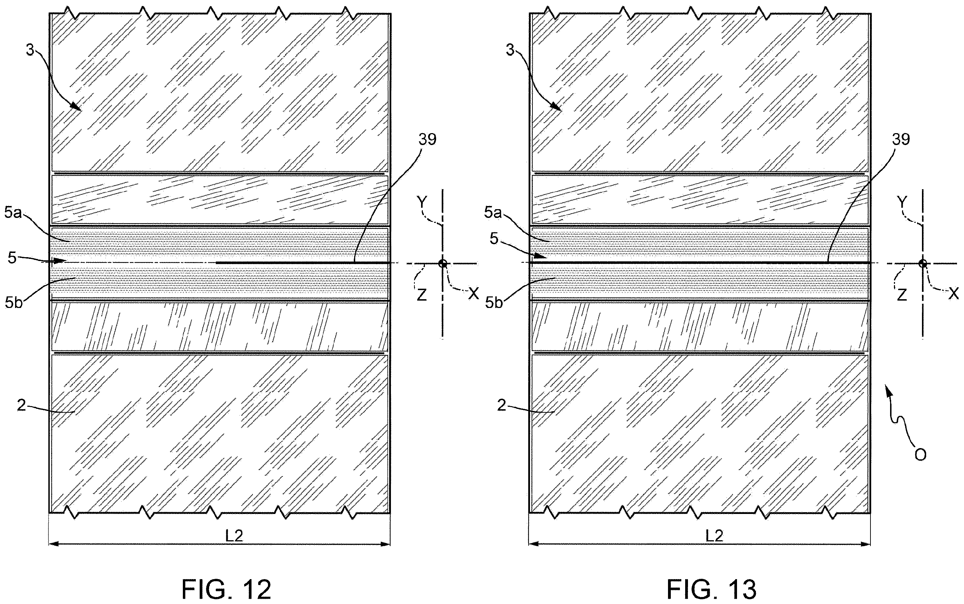

In addition, when knife 7 is in operating position O, cutting surface 39 corresponds to the entire length L2 of the respective transverse section 5 (Figures 5 and 13).

The dimensions and proportions of cutting surface 39 and transverse section 5 shown in figures 10 to 13 must be intended as purely indicative and non-limiting.

In the following, the word "obliquely" is used to indicate a movement not parallel to directions Z, but parallel to plane P.

In detail, conduits 28a have a restrictor 60, which narrows the cross section of at least a portion of conduits 28a, thus defining a local pressure drop Δp of fluid 70.

In the embodiment shown, restrictor 60 narrows the cross section of cylinder supply conduit 51a and purge conduit 29a (see the detailed cross-section of Figure 6a).

On the contrary, conduits 28b are free and have no body restricting the cross section of cylinder supply conduit 51b and purge conduit 29b (see the detailed cross-section of Figure 7a).

As a consequence, a pressure pB of fluid 70 measured at a section B of cylinder supply conduit 51a arranged downstream of restrictor 60 (Figure 6) is lower than a pressure pC of fluid 70 measured at a section C of cylinder supply conduit 51b (Figure 7).

Therefore, the magnitude of force F1 exerted by piston 24 is lower than the magnitude of force F2 exerted by piston 25.

In the embodiment shown, restrictor 60 is a cylindrical body coaxial and integral with threaded cap 31a (Figure 6).

In detail, the diameter D1 of restrictor 60 is smaller than the diameter D2 of cylinder supply conduit 51a (Figure 6a) .

With reference to Figures 2 to 5, counter-jaw 4b also comprises a link 34 interposed between pistons 24 and 25 along direction Z (Figures 2 to 5), connecting knife 7 to the counter-jaw 4b itself and extending parallel to direction X.

In particular, link 34 comprises, in turn, an elongated element 35, which extends parallel to direction X, and a round element 36, which is arranged at one end of elongated element 35 close to cutting edge 21 along direction X.

In detail, elongated element 35 extends across counter-jaw 4b, while round element 36 is arranged in a corresponding recess 37 of knife 7 (Figures 2 to 5).

Link 34 is slidable along direction X integrally with knife 7.

Round element 36 and recess 37 define a hinge 38 of knife 7 to counter-jaw 4b.

As a consequence, knife 7 is rotatable with respect to hinge 38 about axis W.

In addition, pistons 24, 25 and relative cylinders 26, 27 are arranged on opposite sides of hinge 38 parallel to direction Z (Figures 2 to 5).

Furthermore, counter-jaw 4b comprises elastic means 40, which push knife 7 towards resting position R.

In the embodiment shown, elastic means 40 comprise a helical spring 41 wound about elongated element 35 along direction X.

In detail, spring 41 exerts on knife 7 an elastic force F3 parallel to direction X and oriented from sealing jaw 4a towards counter-jaw 4b (Figures 2 to 5). In other words, elastic force F3 is opposite to forces F1 and F2.

In addition, restrictor 60 is also active during the return movement of knife 7 from operating position O to resting position R, so as to arrange cutting edge 21 obliquely with respect to direction Z of the transverse section 5 already cut under the action of elastic means 40.

Furthermore, counter-jaw 4b comprises two blocks 32, 33, which are fixed to and integrally movable with knife 7 (Figures 2 to 5).

In the embodiment shown, blocks 32, 33 engage respective recesses of main body 20 on the side of knife 7 opposite to cutting edge 21.

Each block 32, 33 is interposed between knife 7 and respective pistons 24, 25 along direction X.

Preferably, pistons 24 and 25 are in contact with respective blocks 32 and 33 throughout the operation of knife 7 (Figures 2 to 5). As a consequence, pistons 24 and 25 are constantly in indirect contact with knife 7 through respective blocks 32 and 33.

Blocks 32 and 33 transmit to knife 7 forces F1 and F2 exerted by respective pistons 24 and 25.

With reference to Figures 2 to 5, blocks 32 and 33 are arranged at respective opposite sides of round element 36 along direction Z (Figures 2 to 5).

The operation of packaging unit 1 will now be described starting from a condition in which a pair of jaws 4 is positioned along direction Y at a just sealed transverse section 5 of tube 3 and knife 7 is in resting position R (Figures 2 and 8).

In order to begin the cutting movement of knife 7 towards operating position O, fluid 70 is supplied to cylinders 26 and 27 through respective inlet conduits 50a, 50b.

In detail, fluid 70 flowing from inlet conduits 50a towards cylinder supply conduit 51a undergoes local pressure drop Δp, because of restrictor 60 (Figures 6 and 6a).

On the contrary, fluid 70 flowing from inlet conduits 50b towards cylinder supply conduit 51b does not undergo local pressure drop Δp, because conduits 28b are free and have no body restricting the cross section of cylinder supply conduit 51b (Figures 7 and 7a).

As a consequence, pressure pB of fluid 70 measured at section B (Figure 6) is lower than pressure pC of fluid 70 measured at section C (Figure 7).

Therefore, during the cutting movement of knife 7 the magnitude of force F1 exerted by piston 24 is lower than the magnitude of force F2 exerted by piston 25.

Since both forces F1 and F2 are parallel to direction X, knife 7 and link 34 slide along direction X.

In addition, since the magnitude of force F1 is lower than the magnitude of force F2, knife 7 is rotated about hinge 38 parallel to plane P as it slides along direction X and cutting edge 21 becomes oblique with respect to the respective direction Z.

With reference to Figures 2 to 5, during the cutting movement knife 7 is rotated anti-clockwise about hinge 38.

As pistons 24 and 25 move within their respective strokes, knife 7 is moved towards operating position O and cutting edge 21 is kept oblique with respect to the respective direction Z.

Cutting edge 21 contacts transverse section 5 along a cutting surface 39 parallel to the respective direction Z progressively increasing as knife 7 moves from resting position R towards operating position O (Figures 3 to 5 and 11 to 13).

In detail, cutting surface 39 extends centrally between the relative pair of transverse sealing strips 5a, 5b (Figures 10 to 13).

At this stage, when knife 7 is in operating position O, cutting surface 39 corresponds to the entire length L2 of transverse section 5 and cutting edge 21 abuts against block 23 of sealing jaw 4a (Figures 5 and 13).

Once knife 7 has reached operating position O, the cutting movement is complete and one sealed package 2 is separated from tube 3 (Figure 1).

In addition, no more fluid 70 is fed towards cylinders 26, 27 and spring 41 causes knife 7 to move back from operating position O towards resting position R, by exerting force F3 through link 34.

Since restrictor 60 is still arranged inside cylinder supply conduit 51a, fluid 70 flows out of cylinder 26 at a different speed than the speed at which fluid 70 flows out of cylinder 27.

Accordingly, piston 24 slides along direction X moving away from sealing jaw 4a more slowly than piston 25.

As a consequence, cutting edge 21 is moved obliquely with respect to the respective direction Z during the return movement of knife 7.

The advantages of packaging unit 1 according to the present invention will be clear from the above description.

In particular, since cutting edge 21 of knife 7 is moved obliquely with respect to the respective direction Z during the cutting movement of knife 7 and contacts transverse section 5 along a progressively increasing cutting surface 39, knife 7 efficiently cuts the transverse section 5 itself.

In fact, it has been observed that the particular way in which cutting edge 21 contacts transverse section 5 allows a precise cut of the locally melt packaging material.

As a consequence, knife 7 does not just tear tube 3 at transverse section 5, but sharply cuts it, thus limiting the development of cutting burrs and other cutting defects.

In addition, it has been observed that thanks to the claimed arrangement of cutting edge 21 during the cutting movement, a precise and efficient cut of transverse sections 5 can be achieved even reducing the pressure of fluid 70 at inlet conduits 50a, 50b (for example at sections A) compared to the pressure used in a packaging unit 1 having no restrictor 60 in cylinder supply conduit 51a.

Accordingly, forces F1, F2 acting on knife 7 can be reduced and wear of knife 7 can be limited.

Furthermore, it has been observed that since cutting edge 21 is moved obliquely with respect to the respective direction Z also during the return movement of knife 7, the risk of knife 7 getting stuck in the heated packaging material is significantly reduced compared to the known packaging units discussed in the introductory part of the present description.

In addition, since counter-jaw 4b comprises blocks 32, 33, pistons 24, 25 are not directly in contact with knife 7.

Accordingly, the wear of knife 7 caused by forces F1, F2 can be advantageously limited.

Besides, blocks 32, 33 can be conveniently replaced once worn out, thus helping to extend the service life of knife 7.

Furthermore, since various restrictors 60 can be used having respective different diameters D1, local pressure drop Δp can be advantageously adjusted as required.

Moreover, since restrictor 60 is integral with threaded cap 31a of purge conduit 29a and existing packaging units are normally provided with a purge conduit for the maintenance operations of driving means 8, existing packaging units can be easily retrofitted by simply making some modifications to threaded cap 31a.

Finally, it is apparent that modifications and variants not departing from the scope of protection of the claims may be made to packaging unit 1 according to the present invention.

In particular, pistons 24, 25 and respective cylinders 26, 27 may be different from each other.

In addition, restrictor 60 may be arranged inside cylinder supply conduit 51b instead of cylinder supply conduit 51a.

Furthermore, driving means 8 may comprise more than two pistons 24, 25 and respective cylinders 26, 27.

Knife 7 could be carried by sealing jaw 4a instead of counter-jaw 4b.

Each pair of jaws 4 could comprise more than one knife 7 and each knife 7 could comprise more than one cutting edge 21.

Sealing device 12 and a counter-sealing device 14 could be located on counter-jaw 4b and sealing jaw 4a, respectively.

Packaging unit 1 could comprise more than two pairs of jaws 4.

Furthermore, jaws 4 could be carried by links of respective chain conveyors arranged laterally adjacent to one another so as to allow feeding of the tube 3 of packaging material between the conveyors themselves.

Finally, jaws 4 could be carried by respective carts of linear motor conveyors also arranged laterally adjacent to one another so as to allow feeding of the tube 3 of packaging material between the conveyors themselves.

## Claims

1. Packaging unit (1) for producing sealed packages (2) containing a pourable food product from a tube (3) of packaging material fed along a first direction (Y) and filled with the pourable food product; said unit (1) comprising:
- at least one pair of jaws (4, 4a, 4b), configured to grip said tube (3) along spaced transverse sections (5), defining respective second directions (Z) crosswise with respect to said first direction (Y);
- sealing means (9) configured to seal said transverse sections (5) in order to form said sealed packages (2);
- separating means (6) configured to separate said packages (2) from said tube (3) along said transverse sections (5) and comprising at least one knife (7) movably supported by one of said jaws (4b; 4a); and
- driving means (8) configured to move said knife (7) with respect to said one of said jaws (4b; 4a) along a plane (P) crosswise to said first direction (Y) and between a resting position (R), in which a cutting edge (21) of said knife (7) is spaced from said tube (3) and is aligned with the respective second direction (Z) defined by the transverse section (5) to be cut, and an operating position (O), in which said knife (7) has completely cut said tube (3) at the respective transverse section (5);
**characterized in that** said driving means (8) are configured to move said cutting edge (21) obliquely with respect to the respective second direction (Z) when said driving means (8) move, in use, said knife (7) from said resting position (R) towards said operating position (O);
said cutting edge (21) contacting, in use, the respective transverse section (5) along a cutting surface (39), which is parallel to the respective second direction (Z) and progressively increases as said knife (7) moves, in use, from said resting position (R) to said operating position (O) ;
said cutting surface (39) corresponding to the length (L2) of said respective transverse section (5) along the respective second direction (Z) when said knife (7) is in said operating position (0).

2. The packaging unit of claim 1, wherein the movement imparted by said driving means (8) to said knife (7) from the resting position (R) to the operating position (O) includes a translational component along a third direction (X), crosswise to said first direction (Y) and said second direction (Z) and lying in said plane (P), and a rotational component about an axis (W) parallel to said first direction (Y) .

3. The packaging unit of claim 2, wherein said knife (7) is hinged to said one of said jaws (4b; 4a) about said axis (W).

4. The packaging unit of claim 3, wherein said driving means (8) comprise at least a first actuator (26; 27) and a second actuator (27; 26), arranged on opposite sides of said hinge (38) and selectively acting on said knife (7) respectively with a first force (F1; F2) and a second force (F2; F1), parallel to said third direction (X) and having different magnitudes, to move said knife (7) from said resting position (R) towards said operating position (O) obliquely with respect to the relative second direction (Z).

5. The packaging unit of claim 4, wherein said first actuator (26; 27) and said second actuator (27; 26) comprise respectively a first hydraulic piston (24; 25) and a second hydraulic piston (25; 24), sliding respectively in said first cylinder (26; 27) and said second cylinder (27; 26);
said first cylinder (26; 27) and said second cylinder (27; 26) being supplied with pressurised fluid (70) respectively at a first pressure (pB) and a second pressure (pC) different from one another.

6. The packaging unit of claim 5, wherein said one of said jaws (4b; 4a) movably supporting said knife (7) comprises at least a first conduit (28a; 28b) and a second conduit (28b; 28a) for respectively supplying said first cylinder (26; 27) and said second cylinder (27; 26) with said pressurised fluid (70);
said first conduit (28a; 28b) comprising a restrictor (60) configured to narrow the cross section of at least a portion (51a, 29a; 51b, 29b) of the first conduit itself (28a; 28b) and to define a local pressure drop (Δp) of said pressurised fluid (70);
said first conduit (28a; 28b) and said second conduit (28b; 28a) being supplied with said pressurised fluid (70) by a common pipe.

7. The packaging unit of claim 6, wherein said one of said jaws (4b; 4a) movably supporting said knife (7) comprises elastic means (40) pushing said knife (7) towards said resting position (R); and
wherein said restrictor (60) is also active during a return movement of said knife (7) from said operating position (O) to said resting position (R), so as to arrange said cutting edge (21) obliquely with respect to said second direction (Z) of the transverse section (5) already cut under the action of said elastic means (40).

8. The packaging unit of claim 7, wherein said elastic means (40) exert, in use, a third force (F3) on said knife (7), which is parallel to said third direction (X) and opposite to said first force (F1; F2) and said second force (F2; F1).

9. Method for producing sealed packages (2) containing a pourable food product from a tube (3) of packaging material fed along a first direction (Y) and filled with the pourable food product; said method comprising the steps of:
i) gripping said tube (3) by means of at least one pair of jaws (4, 4a, 4b) along spaced transverse sections (5), defining respective second directions (Z) crosswise with respect to said first direction (Y);
ii) sealing said transverse sections (5) by sealing means (9) carried by said jaws (4, 4a, 4b), in order to form said sealed packages (2);
iii) separating said packages (2) from said tube (3) along said transverse sections (5) by at least one knife (7) movably supported by one of said jaws (4b; 4a);
wherein said step iii) comprises the further step of:
iv) moving said knife (7) along a plane (P) crosswise to said first direction (Y) and from a resting position (R) to an operating position;
wherein, in said resting position (R), a cutting edge (21) of said knife (7) is aligned with the respective second direction (Z) and spaced from said tube (3); and
wherein, in said operating position (O), said knife (7) has completely cut said tube (3) at one of said transverse sections (5);
said step iii) being **characterized by** comprising the further steps of:
v) moving said cutting edge (21) obliquely with respect to said second direction (Z) during said step iv); and
vi) contacting said respective transverse section (5) with said cutting edge (21) along a cutting surface (39) parallel to said second direction (Z) and progressively increasing during said step iv);
said cutting surface (39) corresponding to a length (L2) of said respective transverse section (5) along said second direction (Z) when said knife (7) is in said operating position (O).

10. The method of claim 9, wherein the movement of said knife (7) during the step iv) from the resting position (R) to the operating position (O) includes a translational component along a third direction (X), crosswise to said first direction (Y) and said second direction (Z) and lying in said plane (P), and a rotational component about an axis (W) parallel to said first direction (Y).

11. The method as claimed in claim 9 or 10, and further comprising the step of vii) moving back said knife (7) from said operating position (O) to said resting position (R) with the cutting edge (21) obliquely arranged with respect to said second direction (Z) of the transverse section (5) already cut.
